# EUROPÄISCHE PATENTANMELDUNG

(11) **EP 1 710 120 A2**
(43) Veröffentlichungstag der Anmeldung: **11.10.2006**
(21) Anmeldenummer: 06110185.3
(22) Anmeldetag: 21.02.2006
(51) Int. Cl.: B60N 2/44

(54) **Kraftfahrzeugsitz, sowie Vorrichtung und Verfahren zum Befüllen und/oder Entlüften von aufblasbaren Kissen**

(30) Priorität: 08.04.2005 DE 102005016184
(71) Anmelder: ROBERT BOSCH GMBH, 70442 Stuttgart (DE)
(72) Erfinder: Farr, Peter, Remchingen 75196 (DE); Bolz, Martin-Peter, Buehl 77815 (DE); Paessler, Wolfgang, Obersasbach 77880 (DE)

(57) **Zusammenfassung**

Vorrichtung (10) und Verfahren zum Befüllen und/oder Entlüften von aufblasbaren Kissen (14, 22, 24) in einem Kraftfahrzeugsitz (12), mit einer Pumpe (26) und einem Druckspeicher (28), der über mindestens ein Magnetventil (36, 37) mit dem mindestens einen Kissen (14, 22, 24) verbunden ist, wobei der Druckspeicher (28) als flexibles, schlauchförmiges Zusatzvolumen ausgebildet ist, das die Pumpe (26) mit dem mindestens einen Magnetventil (36, 37) verbindet.

## Beschreibung

### Stand der Technik

Die Erfindung betrifft einen Kraftfahrzeugsitz, sowie eine Vorrichtung und ein Verfahren zum Befüllen und/oder Entlüften von aufblasbaren Kissen nach der Gattung der unabhängigen Ansprüche.

Mit der DE 35 05 088 C1 ist ein Kraftwagensitz mit in der Polsterung eingelassenen aufblasbaren Kissen zur individuellen Abstützung eines Sitzbenutzers bekannt geworden. Hierbei erzeugt eine Pumpe, die außerhalb des Sitzes angeordnet ist, Druckluft, die in eine Leitung und einen damit verbundenen Druckspeicher eingespeist wird. Der Druckspeicher, der ebenfalls außerhalb des Sitzes angeordnet ist, ist mit einer Druckregulierungseinrichtung verbunden, die wiederum mit Magnetventilen verbunden ist, die die Druckregulierung in den aufblasbaren Kissen des Sitzes regeln. Eine solche Anordnung mit einer direkten Verbindungsleitung zwischen der Pumpe und den Magnetventilen hat den Nachteil, dass sich die Pulsation der Pumpe über die Verbindungsleitungen direkt auf die Luftkissen überträgt. Außerdem beansprucht der Luftspeicher relativ viel Bauraum, so dass dieser in der Regel im Kofferraum des Fahrzeugs angeordnet werden muss.

### Vorteile der Erfindung

Die erfindungsgemäße Vorrichtung und das Verfahren mit den Merkmalen der unabhängigen Ansprüche haben den Vorteil, dass durch die Ausbildung des Luftspeichers als flexibles, schlauchförmiges Zusatzvolumen dieser flexible Speicher problemlos auch bei beengten Platzverhältnissen und verwinkeltem Bauraum angeordnet werden kann. Insbesondere kann dadurch der flexible Luftspeicher innerhalb des Fahrzeugsitzes unmittelbar zwischen der Pumpe und dem Magnetventil verbunden werden. Der schlauchfömige Druckspeicher dämpft dabei die von der Pumpe erzeugten Pulsationen, so dass sich der Sitzkomfort auf dem Luftkissen erhöht. Durch die unmittelbare räumliche Nähe des flexiblen Luftspeichers zu den Luftkissen können diese sehr schnell und effizient aufgepumpt werden. Durch den flexiblen Druckspeicher kann dabei eine leistungsschwächere, und somit billigere Pumpe verwendet werden.

Durch die in den Unteransprüchen ausgeführten Merkmale sind vorteilhafte Weiterbildungen der Vorrichtungen und des Verfahrens nach den unabhängigen Ansprüchen möglich. Dadurch, dass dieser schlauchförmige Druckspeicher einen deutlich größeren Durchmesser aufweist als beispielsweise die gewöhnlichen Verbindungsleitungen zwischen den einzelnen pneumatischen Komponenten, wird die von der Pumpe erzeugte Pulsation deutlich reduziert. Aufgrund des großen Durchmessers des schlauchförmigen Luftspeichers sind die Druckverluste über die Verbindungstrecke zwischen der Pumpe und dem Magnetventil vemachlässigbar. Wird der Luftspeicher beispielsweise durch Ablängen eines Schlauchstücks von einer langen Schlauchrolle hergestellt, können auf einfache Weise Druckspeicher mit unterschiedlichem Volumen gefertigt werden. Dabei entfällt die Fertigung unterschiedlicher Spritzgussformen, wie dies beispielsweise zur Herstellung formstabiler Druckspeicher mit verschiedenen Volumina notwendig ist. Durch die Flexibilität eines solchen Schlauches kann dieser, trotz relativ großen Durchmessers, trotzdem recht bequem in den Hohlräumen des Sitzes oder der Karosserie eingefügt werden.

Eine sehr hohe Flexibilität des Druckspeichers wird durch dessen Herstellung aus Gummi oder eines elastischen Kunststoffes erzielt, da sich hierbei das Volumen des Luftspeichers individuell an den zur Verfiigung stehenden Bauraum anpassen kann. Dabei ist es beispielsweise auch möglich, dass sich das Volumen des Luftspeichers mit steigendem Druck verformt oder ausdehnt.

Für den Sitzkomfort ist es von Vorteil, wenn das Volumen des Druckspeichers auch bei variablem Druck näherungsweise konstant bleibt. Hierzu wird der Luftspeicher günstiger weise mit einer besonders dicken Wandung ausgebildet, oder ein relativ stark dehnbares Material mit einer Ummantelung verkleidet, die eine stärkere Volumenausbildung des Luftspeichers verhindert.

Besonders platzsparend kann das flexible Zusatzvolumen in den Fahrzeugsitz integriert werden. Dabei kann der flexible, voluminöse Schlauch beispielsweise u-förmig im Bereich der Rückenlehne eingebettet werden.

Ist die Pumpe, die beispielsweise als Kolbenpumpe ausgebildet ist, ebenfalls in den Sitz integriert, steht für die Luftkissen eine sehr effiziente und schnelle Druckversorgung zur Verfiigung. Durch den relativ großen Querschnitt des schlauchförmigen Luftspeichers liegt die Luftpumpe praktisch direkt an den Magnetventilen an, wodurch ein Druckabfall über gewöhnliche Verbindungsleitungen verhindert wird.

Eine solche Vorrichtung eignet sich besonders für das Regulierungen des Drucks von fahrdynamischen Seitenkissen zur Seitenabstützung des Sitzbenutzers. Hierbei wird der Vorrichtung ein Querbeschleunigungssignal zugefiihrt, aus dem das Solldruckniveau in den entsprechenden Luftkissen bestimmt wird. Zur Einstellung des Drucks in den aufblasbaren Kissen sind in diesen und in dem flexiblen Luftspeicher Sensoren zur Bestimmung des Druckniveaus angeordnet. Dadurch kann die Steuereinheit aufgrund des Querbeschleunigungssignals und eventueller weiterer zusätzlicher Signale entsprechend die Luftpumpe und die Magnetventile bestromen, um jeweils die gewünschten Druckniveaus einzustellen.

Besonders günstig ist es, die erfindungsgemäße Vorrichtung komplett in einem Kraftfahrzeugsitz zu integrieren, da dann zur Druckregelung der aufblasbaren Kissen keine pneumatischen Verbindungsleitungen mit weiteren pneumatischen Komponenten, die beispielsweise Kofferraum angeordnet sind, notwendig sind. Dadurch kann ein solcher fahrdynamischer Sitz bequem als Sonderausstattung nachgerüstet werden, ohne dass weitere konstruktive Änderungen im Fahrzeug notwendig sind.

Das erfmdungsgemäße Verfahren eignet sich für die schnelle Druckbeaufschlagung von aufblasbaren Kissen, wie dieses zur Abstützung des Sitzbenutzers bei besonders sportlicher Fahrweise oder plötzlichen Lenkbewegungen des Fahrers notwendig ist. Durch die Anordnung des flexiblen Druckspeichers in unmittelbarer Nähe zu den Ventilen, die den Druck der aufblasbaren Kissen steuern, wird durch den vorher im Luftspeicher erzeugten Überdruck eine sehr schnelle Erhöhung des Druckniveaus in den Luftkissen erzielt.

Zusätzlich kann dieses schnelle Befiillen der entsprechenden Luftkissen durch die gleichzeitige Förderung des Arbeitsfluids durch die Pumpe verstärkt werden. Nachdem der Solldruck in dem aufblasbaren Kissen erreicht ist, kann die Pumpe immer noch solange eingeschaltet bleiben, bis sich in dem flexiblen schlauchfömigen Druckspeicher wieder ein entsprechender Überdruck einstellt.

Das erfindungsgemäße Verfahren eignet sich ebenfalls zum Betreiben einer Massagefunktion des Fahrers durch die ständige Variation des Drucks in den aufblasbaren Luftkissen.

### Zeichnung

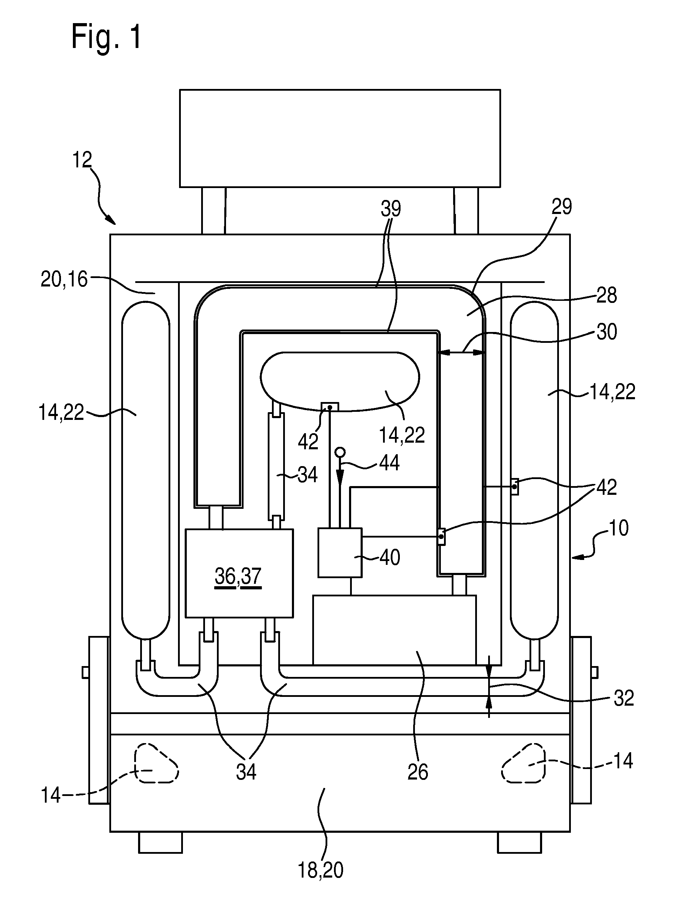

In der Zeichnung ist ein Ausführungsbeispiel einer erfmdungsgemäßen Vorrichtung dargestellt und in der nachfolgenden Beschreibung näher erläutert. Es zeigt Figur 1 eine schematische Darstellung eines Fahrzeugsitzes mit einem in diesem integrierte Vorrichtung zur Steuerung des Druckniveaus von aufblasbaren Kissen.

### Beschreibung des Ausführungsbeispiels

In Figur 1 ist eine Vorrichtung 10 zum Befiillen und Entlüften von aufblasbaren Kissen 14 dargestellt, die in einen Kraftfahrzeugsitz 12 integriert sind. Der Kraftfahrzeugsitz 12 weist eine Rückenlehne 16 und eine Sitzfläche 18 mit einer Polsterung 20 auf, in die die verschiedenen aufblasbaren Kissen 14 eingebettet sind. Einige der Kissen 14 sind dabei als variable Seitenabstützung 22 für den Sitzbenutzer ausgeführt, andere Kissen 14 bilden eine Massageeinrichtung 24 mit ständig veränderlichem Druckniveau. Die Vorrichtung 10 weist eine Pumpe 26 auf, die beispielsweise als Kolbenpumpe 26 ausgebildet ist, die ein Arbeitsmedium zum Befiillen der Kissen 14 komprimiert. Als Arbeitsfluid wird beispielsweise Luft verwendet, die von der Pumpe 26 in einen schlauchförmigen flexiblen Druckspeicher 28 befördert wird, der direkt mit der Pumpe 26 verbunden ist. Der Druckspeicher 28 ist beispielsweise als flexibler, voluminöser Schlauch 28 ausgebildet, dessen Durchmesser 30 deutlicher größer ist, als der Durchmesser 32 der gewöhnlichen pneumatischen Verbindungsleitungen 34. Der schlauchförmige Druckspeicher 28 ist im Ausführungsbeispiel u-förmig innerhalb der Rückenlehne 16 eingebettet und verbindet die Pumpe 26 mit einem Magnetventilblock 36, der mehrere Magnetventile 37 zur Befiillung und Entlüftung der einzelnen Luftkissen 14 aufweist. Durch die flexible Struktur des Druckspeichers 28 passt sich dieser optimal an den zur Verfügung stehenden Bauraum innerhalb des Sitzes 12 an. Durch die u-förmige Anordnung des Druckspeichers 28 in der Rückenlehne 16 ist der flexible Druckspeicher beispielsweise 28 gleichzeitig als Form gebender Teil der Sitzstruktur 12 ausgebildet. Um das Volumen des schlauchförmigen Druckspeichers 28 näherungsweise konstant zu halten, ist der flexible Schlauch 28 mit besonders dicken Wänden 29, oder beispielsweise mit einer gewebeverstärkten Ummantelung 39 ausgebildet sein. Zur Befiillung und Entleerung der Luftkissen 14 wird die Pumpe 26 und die Magnetventile 37 über eine Steuereinheit 40 angesteuert, die in Abhängigkeit der Signale von in den Kissen 14 angeordneten Drucksensoren 42 das Druckniveau in den Kissen 14, 22, 24 regelt. Der flexible Druckspeicher 28 weist ebenfalls einen Drucksensor 42 auf, wodurch ein vorgebbarer Überdruck gegenüber den Kissen 14 einstellbar ist. Der Steuereinheit 40 wird als zusätzliche Regelungsgröße ein Querbeschleunigungssignal 44 zugeführt, das die Stärke einer Kurvenfahrt repräsentiert.

Gibt die Steuereinheit 40 entsprechend dem erfmdungsgemäßen Verfahren ein bestimmtes Solldruckniveau für eines oder mehrere der Kissen 14 vor, wird die Pumpe 26 eingeschaltet. Diese befördert das Arbeitsfluid durch den flexiblen Druckspeicher 28 und durch die geöffneten Magnetventile 37 hindurch in die Kissen 14, bis die Drucksensoren 42 in diesen das Erreichen des Solldruckniveaus anzeigen. Dann werden die Magnetventile 37 geschlossen, wobei jetzt die Pumpe 26 weiterhin einen Überdruck in dem schlauchförmigen Druckspeicher 28 aufbaut, dessen Druckniveau über einen weiteren Drucksensor 42 einstellbar ist. Nachdem im Druckspeicher 28 ein vorgebbarer Überdruck erreicht ist, wird die Pumpe 26 abgeschaltet. Da die Pumpe 26 mit Rückschlagventilen ausgestattet ist, bleibt der Überdruck im flexiblen Druckspeicher 28 auch über längere Zeit erhalten. Erhält nun die Steuereinheit 40 beispielsweise über das Beschleunigungssignal 44 den Befehl ein als Seitenabstützung 22 ausgebildetes Kissen 14 schnell auf ein höheres Druckniveau anzuheben, wird das entsprechende Magnetventil 37 geöffnet. Hierdurch entweicht der in dem flexiblen Druckspeicher 28 gespeicherte Überdruck in das entsprechende Kissen 14, wodurch dessen Druckniveau sehr schnell angehoben wird. Optional wird dieser Befüllungsvorgang des Kissens 14 gleichzeitig dadurch verstärkt, dass mit dem Öffnen des Magnetventils 37 die Pumpe 26 eingeschalten wird, wodurch ein zusätzlicher Förderstrom des Arbeitsfluids erzeugt wird. In diesem Zustand kann eine sehr schnelle Druckänderung in den Kissen 14, 22, 24 erzielt werden, wobei aufgrund des großen Querschnitts 30 der als Druckspeicher 28 ausgebildeten Verbindung zwischen der Pumpe 26 und den magnetischen Ventilen 37 Druckschwankungen durch die Pulsation der Pumpe 26 deutlich reduziert werden.

Es sei angemerkt, dass hinsichtlich des in der Figur 1 und in der Beschreibung dargestellten Ausführungsbeispiels vielfältige Kombinationsmöglichkeiten der einzelnen Merkmale untereinander möglich sind. So kann beispielsweise die konkrete Ausgestaltung der Kissen 14, 22, 44 und deren Funktion im Fahrzeugsitz 12 beliebig variiert werden. Ebenso kann die konkrete Ausformung des flexiblen Druckspeichers 28 dem zur Verfiigung stehenden Bauraum angepasst werden. Beispielsweise ist es auch möglich, den flexiblen Druckspeicher 28 in Hohlräumen der Karosserie, beispielsweise benachbart zum Fahrzeugsitz 12, anzuordnen. Der Druckspeicher 28 kann dabei als näherungsweise volumenkonstantes Zusatzvolumen 28, oder als ausdehnbares Zusatzvolumen 28 ausgebildet sein. Die Form des Druckspeichers 28 ist nicht auf einen Schlauch 28 beschränkt, sondern kann auch andere Ausformungen annehmen, die aufgrund einer beweglichen Struktur einfach in den zur Verfiigung stehenden Bauraum eingefügt werden können. Bevorzugt ist der flexible Druckspeicher 28 als Verbindung zwischen der Pumpe 26 und den Magnetventilen 37 ausgebildet und zusammen mit diesem im Kraftfahrzeugsitz 12 integriert.

## Patentansprüche

1. Vorrichtung (10) zum Befiillen und/oder Entlüften von aufblasbaren Kissen (14, 22, 24) in einem Kraftfahrzeugsitz (12), mit einer Pumpe (26) und einem Druckspeicher (28), der über mindestens ein Magnetventil (36, 37) mit dem mindestens einen Kissen (14, 22, 24) verbunden ist, **dadurch gekennzeichnet, dass** der Druckspeicher (28) als flexibles, schlauchförmiges Zusatzvolumen ausgebildet ist, das die Pumpe (26) mit dem mindestens einen Magnetventil (36, 37) verbindet.

2. Vorrichtung (10) nach Anspruch 1, **dadurch gekennzeichnet, dass** der schlauchförmige Druckspeicher (28) einen Durchmesser (30) aufweist, der wesentlich größer ist als der Durchmesser (32) von pneumatischen Verbindungsleitungen (34) zwischen weiteren pneumatischen Bauteilen (36, 14, 22, 24).

3. Vorrichtung (10) nach einem der Ansprüche 1 oder 2, **dadurch gekennzeichnet, dass** der schlauchförmige Druckspeicher (28) eine Wandung (29) aus Gummi oder Kunststoff aufweist.

4. Vorrichtung (10) nach einem der Ansprüche 1 bis 3, **dadurch gekennzeichnet, dass** der schlauchförmige Druckspeicher (28) bei unterschiedlicher Druckbeaufschlagung ein im wesentlichen konstantes Volumen aufweist, wobei der Druckspeicher (28) insbesondere eine gewebeverstärkte Ummantelung (39) aufweist.

5. Vorrichtung (10) nach einem der Ansprüche 1 bis 4, **dadurch gekennzeichnet, dass** der schlauchförmige Druckspeicher (28) innerhalb eines Kraftfahrzeugsitzes (12), insbesondere im Bereich der Rückenlehne (16), angeordnet ist.

6. Vorrichtung (10) nach einem der Ansprüche 1 bis 5, **dadurch gekennzeichnet, dass** die Pumpe (26) im oder am Kraftfahrzeugsitz (12) angeordnet ist.

7. Vorrichtung (10) nach einem der Ansprüche 1 bis 6, **dadurch gekennzeichnet, dass** das mindestens eine Kissen (14) als Seitenkissen einer einstellbaren Seitenabstützung (22) eines Sitzbenutzers ausgebildet ist, wobei zur Steuerung des Druckniveaus im Kissen (14, 22, 24) ein Querbeschleunigungssignal (44) des Fahrzeugs herangezogen wird.

8. Vorrichtung (10) nach einem der Ansprüche 1 bis 7, **dadurch gekennzeichnet, dass** in dem mindestens einen Kissen (14, 22, 24) und in dem schlauchförmigen Druckspeicher (28) Drucksensoren (42) angeordnet sind, die zur Steuerung deren Druckniveaus Signale zusammen mit dem Querbeschleunigungssignal (44) einer Steuereinheit (40) zuführen, die die Betätigung der Pumpe (26) und des mindestens einen Magnetventils (36, 37) steuert.

9. Kraftfahrzeugsitz, aufweisend in diesen integrierte, aufblasbare Kissen (14, 22, 24) mit Magnetventilen (36, 37) zur Steuerung des Druckniveau der Kissen (14, 22, 24) **dadurch gekennzeichnet, dass** im Kraftfahrzeugsitz (12) eine Fluid-Pumpe (26) angeordnet ist, die über einen flexiblen, schlauchförmigen Druckspeicher (28) mit den Magnetventilen (36, 37) verbunden ist.

10. Verfahren zum Befüllen und/oder Entlüften von aufblasbaren Kissen (14, 22, 24) in einem Kraftfahrzeugsitz (12), mit einer Pumpe (26), die über einen flexiblen, schlauchförmigen Druckspeicher (28) mit mindestens einem Magnetventil (36, 37) für die Steuerung des Druckniveaus in dem mindestens einen Kissen(14, 22, 24) verbunden ist, mit den folgenden Schritten:
- bei Anforderung eines Drucks im Kissen (14, 22, 24) wird die Pumpe (26) eingeschaltet und das Magnetventil (36, 37) geöffnet,
- durch den flexiblen, schlauchförmigen Druckspeicher (28) strömt Arbeitsfluid in das Kissen (14, 22, 24), bis nach Erreichen eines Soll-Druckniveaus im Kissen (14, 22, 24), das Magnetventil (36, 37) geschlossen wird,
- die Pumpe (26) läuft noch eine einstellbare Zeitspanne nach, um einen Überdruck im flexiblen, schlauchförmigen Druckspeicher (28) aufzubauen, der über dem Druckniveau im Kissen (14, 22, 24) liegt,
- bei erneuter Anforderung eines zusätzlichen Druckes im Kissen (14, 22, 24) wird das Magnetventil (36, 37) geöffnet, wodurch der Überdruck im schlauchförmigen Druckspeicher (28) einen schnellen Anstieg des Druckniveaus im Kissen (14, 22, 24) bewirkt.

11. Verfahren nach Anspruch 10, **dadurch gekennzeichnet, dass** bei der erneuten Anforderung eines zusätzlichen Druckes im Kissen (14, 22, 24) die Pumpe (26) eingeschaltet wird, um die schnelle Anhebung des Druckniveaus im Kissen (14, 22, 24) durch den Überdruck im schlauchförmigen Druckspeicher (28) zu unterstützen.
